# EUROPÄISCHE PATENTSCHRIFT

(11) **EP 2 035 659 B1**
(45) Veröffentlichungstag und Bekanntmachung des Hinweises auf die Patenterteilung: **04.12.2013**
(21) Anmeldenummer: 07765692.4
(22) Anmeldetag: 28.06.2007
(51) Int. Cl.: F01K 13/02, F01K 23/00, F01K 23/18

(54) **KRAFTWERKSANLAGE**
POWER PLANT
CENTRALE ÉLECTRIQUE

(30) Priorität: 30.06.2006 EP 06013663
(43) Veröffentlichungstag der Anmeldung: 18.03.2009
(73) Patentinhaber: Siemens Aktiengesellschaft, 80333 München (DE)
(72) Erfinder: HOFMANN, Daniel, 91080 Uttenreuth (DE)
(86) Internationale Anmeldenummer: PCT/EP2007/056462
(87) Internationale Veröffentlichungsnummer: WO 2008/000787

(56) Entgegenhaltungen:
- EP-A1- 1 437 484
- WO-A-95/16296
- DE-A1- 4 315 317
- DE-A1- 19 510 342
- SINDELAR R: "ADAPTIVE BLOCKREGELKONZEPTE MODAN- UND MODAKOND-A" VGB KRAFTWERKSTECHNIK, VGB KRAFTWERKSTECHNIK GMBH. ESSEN, DE, Bd. 78, Nr. 1, 1998, Seiten 48-54, XP000727242 ISSN: 0372-5715
- SINDELAR R: "UNIVERSELLE BLOCKREGELKONZEPTE FUER EINE VERZOEGERUNGSFREIE PRIMAERFREQUENZSTUETZUNG" VGB KRAFTWERKSTECHNIK, VGB KRAFTWERKSTECHNIK GMBH. ESSEN, DE, Bd. 76, Nr. 7, 1. Juli 1996 (1996-07-01), Seiten 549-556, XP000596234 ISSN: 0372-5715
- SINDELAR R: "GEWAEHRLEISTUNG DER SEKUNDENDYNAMIK EINES DAMPFKRAFTWERKSBLOCKES" VGB KRAFTWERKSTECHNIK, VGB KRAFTWERKSTECHNIK GMBH. ESSEN, DE, Bd. 71, Nr. 1, Januar 1991 (1991-01), Seiten 4-13, XP000178871 ISSN: 0372-5715

## Beschreibung

Die Erfindung betrifft eine Kraftwerksanlage mit einer Anzahl von mit einem Energieversorgungsnetz verbundenen Kraftwerkskomponenten, denen jeweils ein Stellglied zur Einstellung einer komponentenspezifischen Leistungsabgabe an das Energieversorgungsnetz zugeordnet ist.

Solche Kraftwerksanlagen sind z.B. in Sindelar R: "Universelle Blockregelkonzepte für eine verzögerungsfreie Primärfrequenzstützung" VGB Kraftwerkstechnik, Bd. 76, Nr.7, 1.7.1996, Seiten 549-556, in EP-A1-1437 484 und in DE 195 10 342 A1 offenbart.

Kraftwerksanlagen, insbesondere Gasturbinenanlagen., Dampfkraftanlagen oder kombinierte Anlagen wie beispielsweise GuD-Anlagen, werden in vielen Bereichen zur Erzeugung elektrischer Energie eingesetzt. Dazu umfassen die Kraftwerksanlagen üblicherweise eine Anzahl von zur Erzeugung der elektrischen Energie vorgesehenen Kraftwerkskomponenten wie beispielsweise Gasturbinen oder Dampfturbinen, die energieseitig auf geeignete weise, beispielsweise über Systeme aus Generatoren und Transformatoren, mit einem Energieversorgungsnetz verbunden sind. Das Energieversorgungsnetz wird dabei im Normalfall durch eine Vielzahl von Verbrauchern und eine Mehrzahl derartiger Kraftwerksanlagen gebildet, wobei jede Kraftwerksanlage oder jeder Kraftwerksblock leistungsgeregelt eine bestimmte Nenn- oder Sollleistung in das Energieversorgungsnetz einspeist.

Im Normalbetrieb oder im so genannten Verbundbetrieb sind dabei üblicherweise sämtliche Kraftwerksanlagen frequenzsynchronisiert, so dass eine gemeinsame Netzfrequenz oder Sollfrequenz im gesamten Energieversorgungsnetz aufrechterhalten werden kann. In einem derartigen ungestörten Verbundbetrieb erfolgt für jede Kraftwerksanlage oder jeden Kraftwerksblock ein transienter Last-Leistungs-Ausgleich auf dem vorgegebenen Sollfrequenzniveau von beispielsweise 50 Hz, wobei ein LastLeistungs-Ausgleich im Sekundenbereich mit Hilfe einer Primärregelung vorgenommen wird, die üblicherweise im Fall einer Frequenzabweichung proportional zu dieser Frequenzabweichung eine entsprechende Primärregelleistung bereitstellt. Durch geeignete Regeleingriffe in den einzelnen Kraftwerksanlagen oder Kraftwerksblöcken kann bei einem derartigen Energieversorgungsnetz oder Verbundnetz somit die gemeinsame Netzfrequenz üblicherweise durchgängig aufrechterhalten werden.

Allerdings kann es beispielsweise infolge größerer Netzstörungen auch zu so genannten Inselbildungen oder Inselbetrieben einzelner oder einiger weniger Kraftwerksanlagen oder Kraftwerksblöcke kommen. Größere Netzstörungen können nämlich Grenzwertverletzungen der relevanten Netzbetriebsgrößen wie beispielsweise der Netzfrequenz oder der Betriebsmittelbeanspruchung wie beispielsweise der Strombelastung verursachen. Derartige Grenzwertverletzungen können sodann zum Zerfall des synchronen Verbundbetriebs des Energieversorgungsnetzes insgesamt auf mehrere, gegeneinander asynchron betriebene Netzinseln oder Teilnetze oder auch zu einer gewollten Abtrennung eines Versorgungsgebietes von vom Verbundbetrieb führen. In derartigen Fällen entstehen so genannte Netzinseln, die sich lokal über einen Teil der Regelzone oder auch über mehrere Regelzonen oder mehrere Regelblöcke erstrecken können. Derartige Netzinseln sind insbesondere dadurch charakterisiert, dass in diesen Inseln die Netzleistung und Netzfrequenz unabhängig von der weiteren Netzumgebung oder dem restlichen Verbundnetz eingestellt und aufrechterhalten werden muss, da eine entsprechende Anbindung an die weitere Netzumgebung nicht mehr vorliegt.

Bei der Entstehung derartiger Netzinseln im Stromnetz wird aus Gründen der Versorgungssicherheit und der Zuverlässigkeit für die an das Energieversorgungsnetz angeschlossenen Verbraucher üblicherweise gefordert, dass jede Energieerzeugungseinheit signifikanter Größe (beispielsweise von mehr als 100 MW) unter der Voraussetzung, dass der vorliegende Leistungsbedarf nicht größer ist als die in der Netzinsel vorhandene Primärregelreserve, in der Lage sein muss, die Netzfrequenz zu regeln und stabil zu halten. Ein derartiger Netz-Inselbetrieb über die jeweilige Kraftwerksanlage muss zudem üblicherweise über mehrere Stunden aufrechterhalten werden können. Kraftwerksanlagen oder Kraftwerksblöcke sind daher üblicherweise generell im Hinblick auf derartige Anforderungen auszulegen, um geeignet an das Energieversorgungsnetz insgesamt angekoppelt werden zu können.

Problematisch bei einer derartigen Netzinselbildung kann jedoch sein, dass die Größe und auch die regeltechnische Charakteristik oder Dynamik des entstehenden Inselnetzes grundsätzlich nicht vorhersagbar ist, insbesondere da üblicherweise (außer bei der kontrollierten und gewollten Ausbildung von Inseln durch gezielte Entkopplung einzelner Anlagen oder Anlagenbereiche vom gesamten Energieversorgungsnetz) Auswirkungen beispielsweise von Netzstörungen oder dergleichen bei der Ausbildung der Inselnetze nicht von vornherein bestimmbar sind. Es ist daher grundsätzlich nicht möglich, die charakteristischen Regeleigenschaften wie beispielsweise regeltechnische Reaktionszeiten oder dergleichen einzelner Kraftwerksanlagen oder Kraftwerksblöcke an die entstehenden Charakteristiken der sich ausbildenden Netzinseln anzupassen. Infolge dessen kann es insbesondere bei der Bildung oder dem Betrieb vergleichsweise kleinerer Netze zur Anregung von Frequenzschwingungen abhängig von der Frequenzabhängigkeit der Verbraucher und deren Zeitkonstanten kommen, die den zuverlässigen Betrieb und die Stabilität des sich ausbildenden Inselnetzes und insbesondere die Konstanthaltung von dessen Netzfrequenz gravierend beeinträchtigen können.

Der Erfindung liegt daher die Aufgabe zugrunde, eine Kraftwerksanlage der oben genannten Art anzugeben, mit der eine besonders hohe betriebliche Stabilität gegenüber der Ausbildung derartiger Frequenzschwingungen im Fall der Netzinselbildung erreichbar ist.

Diese Aufgabe wird erfindungsgemäß durch die technischen Merkmale des Anspruchs 1 gelöst.

Unter "regeltechnische Reaktionszeit" ist hierbei insbesondere die charakteristische Zeitkonstante zu verstehen, mit der eine Kraftwerkskomponente auf die Änderung der Anforderungen bzw. den Regel- oder Steuereingriff reagiert. Hierbei ist besonders die Reaktionscharakteristik zwischen dem Zeitpunkt der Anforderung und der Bereitstellung bzw. Reduktion von Leistung wichtig.

Die Erfindung geht dabei von der Überlegung aus, dass die für die betriebliche Stabilität beim Netzinselbetrieb als problematisch angesehenen Frequenzschwingungen für eine besonders hohe betriebliche Zuverlässigkeit konsequent unterdrückt oder gedämpft werden sollten. Dazu sollten gezielt diejenigen Beiträge eliminiert werden, die derartige Frequenzschwingungen aufrechterhalten oder verstärken könnten. Insbesondere dabeine gezielte Abstimmung auf das Frequenzverhalten des sich bildenden Inselnetzes aufgrund von dessen mangelnder Vorhersehbarkeit grundsätzlich nicht möglich ist, sollte die Kraftwerksanlage mit ihren Kraftwerkskomponenten zumindest derart ausgelegt werden, dass die Kraftwerkskomponenten nicht additiv und synchron zur Ausbildung derartiger Frequenzschwingungen beitragen können. Dies ist durch eine geeignete Auslegung der Kraftwerkskomponenten insbesondere erreichbar, indem gerade auch in regeltechnischer Hinsicht die charakteristischen Eigenfrequenzen einzelner Kraftwerkskomponenten unterschiedlich voneinander gewählt werden, so dass synchronisierte und sich gegenseitig verstärkende Beiträge der Kraftwerkskomponenten untereinander auslegungsbedingt ausgeschlossen sind.

Die Kraftwerksanlage oder der Kraftwerksblock kann in an sich üblicher Weise insbesondere eine oder mehrere Gasturbinen und/oder eine oder mehrere Dampfturbinen als Kraftwerkskomponenten umfassen. Vorteilhafterweise sind diese Komponenten dabei derart ausgelegt, dass ihre regeltechnischen Reaktionszeiten voneinander abweichen. Beispielsweise sind in derartigen Anlagen mit zwei oder mehr Gasturbinen die Gasturbinen vorteilhafterweise mit unterschiedlichen Abstimmungen relativ zueinander ausgelegt, so dass ihre spezifischen regeltechnischen Antworten oder Frequenzantworten voneinander unterschiedlich sind und sich somit gegenseitig nicht verstärken können. In analoger Weise ist beispielsweise für eine kombinierte Gas- und Dampfturbinenanlage oder eine GuD-Anlage die Dampfturbine für eine von der Gasturbinenanlage unterschiedliche regeltechnische Reaktionszeit ausgelegt, so dass auch durch die regeltechnischen Systemantworten von Dampfkraftanlage einerseits und Gasturbinenanlage andererseits keine wechselweise Verstärkung der Frequenzantwort erfolgen kann.

Die mit der Erfindung erzielten Vorteile bestehen insbesondere darin, dass durch die vorgesehenen unterschiedlichen Regelantworten der Kraftwerkskomponenten die Wahrscheinlichkeit einer Resonanzbildung mit dem Inselnetz bei der Inselbildung deutlich verringert ist. Die wechselweise Verstärkung und Aufrechterhaltung an sich unerwünschter Frequenzschwingungen bei der Inselnetzbildung sind somit besonders gering gehalten.

Ein Ausführungsbeispiel der Erfindung wird anhand einer Zeichnung näher erläutert. Darin zeigen:
- FIG 1: schematisch ein Blockschaltbild für die regeltechnische Auslegung eines Verbundnetzes,
- FIG 2: schematisch ein Blockschaltbild für die regeltechnische Auslegung einer GuD-Kraftwerksanlage, und
- FIG 3: schematisch ein Blockschaltbild für die regeltechnische Auslegung einer Dampfkraftwerksanlage.

Gleiche Teile sind in allen Figuren mit denselben Bezugszeichen versehen.

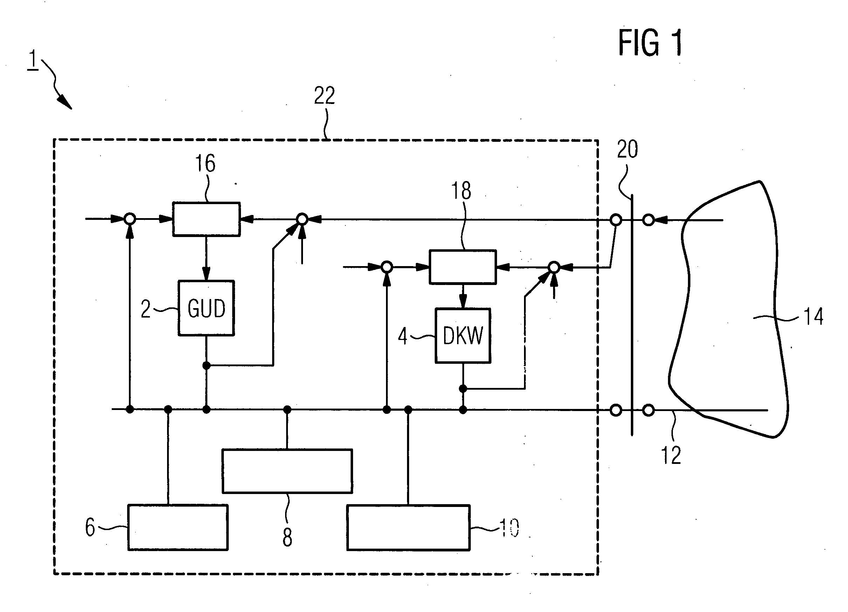

Wie dem Blockschaltbild in FIG 1 entnehmbar ist, wird ein Energieversorgungsnetz 1 gebildet von einer Anzahl von Kraftwerksanlagen 2, 4 und einer Anzahl von Energieverbrauchern 6, 8, 10, die über eine Sammelschiene 12 geeignet miteinander verbunden sind. Darüber hinaus sind über die Sammelschiene 12 noch eine Anzahl weiterer, nicht näher dargestellter Kraftwerksanlagen sowie Verbraucher über ein lediglich angedeutetes erweitertes Netz 14 zugeschaltet, so dass sich ein vergleichsweise weit ausgebreitetes Verbundnetz ergibt. Im Ausführungsbeispiel ist dabei als erste Kraftwerksanlage 2 eine GuD-Anlage und als zweite Kraftwerksanlage 4 ein Dampfkraftwerk vorgesehen. Der Verbraucher 6 ist in regeltechnischer Hinsicht repräsentiert durch eine Solllast, die vom Netz vorgegeben ist, wohingegen der Verbraucher 8 frequenzunabhängige und der Verbraucher 10 frequenzabhängige Lastanforderungen symbolisiert.

Im Normalbetrieb arbeiten die dargestellten Komponenten mit den weiteren im Netz 14 enthaltenen Komponenten synchronisiert und im Verbund zusammen, so dass insgesamt ein Verbundnetz entsteht. Die Aufrechterhaltung der Netzfrequenz und die Einspeisung der vom Gesamtnetz angeforderten Leistung erfolgt durch spezielle und entsprechende Ansteuerung und Regelung der Kraftwerksanlagen 2, 4, wobei jeder Kraftwerksanlage 2, 4 eine entsprechende Regeleinheit 16, 18 zugeordnet ist.

Im Fall einer Netzstörung oder auch infolge von bewusster Einflussnahme auf den Netzbetrieb kann es jedoch zu einer Abkopplung der in der FIG 1 dargestellten Komponenten vom restlichen Netz 14 kommen. Dies ist durch die Linie 20 symbolisiert. In einem derartigen Fall wird die synchrone Betriebsweise der Komponenten mit dem restlichen Netz 14 aufgehoben und es entsteht ein so genannter Inselbetrieb, bei dem sämtliche Anforderungen hinsichtlich Netzfrequenz, Betriebsleistung und/oder Leistungsreserve ausschließlich über die im entsprechenden Teilnetz 22 vorhandenen Komponenten bereitgestellt werden muss. Dies ist in FIG 1 durch den angedeuteten Rahmen charakterisiert.

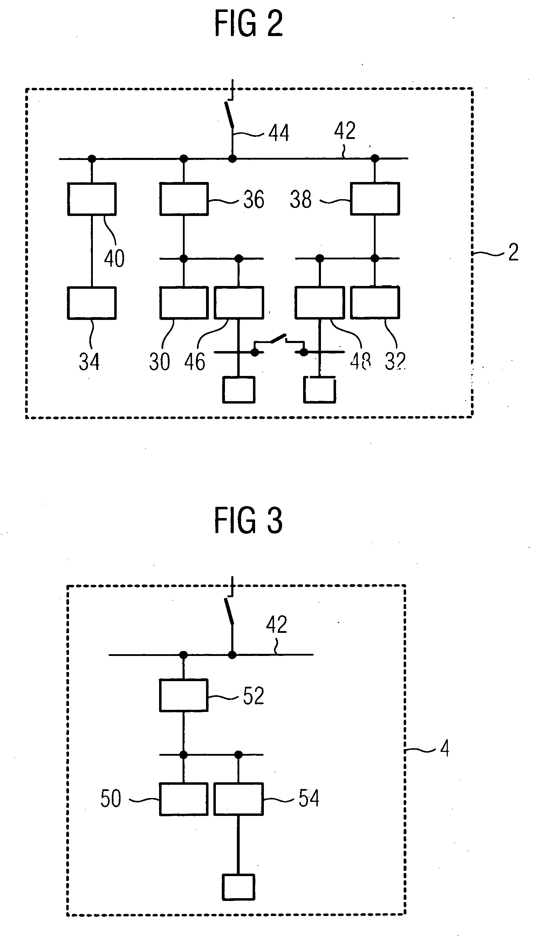

Der regeltechnische Aufbau der Kraftwerksanlage 2 und der Kraftwerksanlage 4 sind in den FIG 2 bzw. 3 dargestellt. Die als GuD-Anlage ausgestaltete Kraftwerksanlage 2 umfasst eine erste Gasturbine 30, eine zweite Gasturbine 32 und eine Dampfturbine 34. Diese Komponenten sind über jeweils zugeordnete Blocktrafos 36, 38, 40 mit einer internen Sammelschiene 42 und über diese über eine Leitung 44 mit der eigentlichen Netzsammelschiene verbunden. Jeder Gasturbine 30, 32 ist zudem jeweils ein Transformator 46, 48 zur Bedienung des Eigenbedarfs zugeordnet.

Die als Dampfkraftwerk ausgelegte Kraftwerksanlage 4 umfasst eine Dampfturbine 50, die über einen Blocktransformator 52 mit der Sammelschiene 42 verbunden ist. Weiterhin ist der Dampfturbine 50 ein Transformator 54 für den Eigenbedarf zugeordnet.

Die Kraftwerksanlagen 2, 4 sind hinsichtlich ihrer regeltechnischen Auslegung für eine besonders hohe Zuverlässigkeit und betriebliche Stabilität selbst bei einer auftretenden Inselbildung ausgelegt. Um dabei insbesondere das Auftreten von Resonanzeffekten und die Ausbildung von Frequenzschwingungen geeignet dämpfen und minimieren zu können, sind die Kraftwerkskomponenten der Kraftwerksanlagen 2, 4, also insbesondere die Gasturbinen 30, 32 und die Dampfturbinen 34, 50 samt den ihnen zugeordneten Reglereinheiten für jeweils unterschiedliche regeltechnische Reaktionszeiten ausgelegt. Dadurch ist gewährleistet, dass infolge der unterschiedlichen Reaktionszeiten keine synchronen Antworten der jeweiligen Kraftwerkskomponenten auf eintreffende Lastanforderungen oder dergleichen auftreten können, sondern dass vielmehr individuell abweichende Systemantworten erfolgen. Damit wird das gesamte regelseitige Verhalten des Systems bzgl. der einzelnen Komponenten entkoppelt, so dass geeignete Dämpfungsmaßnahmen und dergleichen besonders zielgerichtet eingesetzt werden können.

## Patentansprüche

1. Kraftwerksanlage (2, 4) mit einer Anzahl von mit einem Energieversorgungsnetz (1) verbundenen Kraftwerkskomponenten, denen jeweils ein Stellglied zur Einstellung einer komponentenspezifischen Leistungsabgabe an das Energieversorgungsnetz (1) zugeordnet ist, **dadurch gekennzeichnet, dass** zumindest zwei der Stellglieder für unterschiedliche regeltechnische Reaktionszeiten derart ausgelegt sind, dass synchrone Antworten der jeweiligen Kraftwerkskomponenten auf eintreffende Lastanforderungen ausgeschlossen sind, so dass eine hohe betriebliche Stabilität im Netzinselbetrieb erreichbar ist.

2. Kraftwerksanlage (2, 4) nach Anspruch 1, deren Kraftwerkskomponenten mindestens eine Gasturbine (30, 32) umfassen.

3. Kraftwerksanlage (2, 4) nach Anspruch 1 oder 2, deren Kraftwerkskomponenten mindestens eine Dampfturbine (34, 50) umfassen.

## Claims

1. Power plant (2, 4) having a number of power-plant components which are connected to a power supply network (1) and which are assigned in each case one actuator for setting a component-specific power output to the power supply network (1), **characterized in that** at least two of the actuators are designed for different control-system reaction times in such a way that synchronous responses of the respective power-plant components to incoming load requirements are ruled out, with the result that high operating stability in isolated network mode can be achieved.

2. Power plant (2, 4) according to Claim 1, the power-plant components of which comprise at least one gas turbine (30, 32).

3. Power plant (2, 4) according to Claim 1 or 2, the power-plant components of which comprise at least one steam turbine (34, 50).

## Revendications

1. Centrale ( 2, 4 ) électrique ayant un certain nombre de composants de centrale reliés à un réseau d'alimentation en énergie, auxquels est associé respectivement un élément de réglage, pour le réglage d'une cession de puissance spécifique aux composants au réseau ( 1 ) d'alimentation en énergie, **caractérisée en ce qu'**au moins deux des éléments de réglage sont conçus pour des temps de réaction différents en technique de réglage, de manière à exclure des réponses synchrones des composants respectifs de la centrale à des exigences de charge arrivante, de manière à pouvoir obtenir une grande stabilité de fonctionnement en fonctionnement du réseau en îlot.

2. Centrale ( 2, 4 ) électrique suivant la revendication 1, dont les composants comprennent au moins une turbine ( 30, 32 ) à gaz.

3. Centrale ( 2, 4 ) électrique suivant la revendication 1 ou 2, dont les composants comprennent au moins une turbine ( 34, 50 ) à vapeur.
